Europäisches Patentamt

European Patent Office

Office européen des brevets

(19)

(11) EP 0 819 952 A2

## (12) EUROPEAN PATENT APPLICATION

(43) Date of publication:
**21.01.1998 Bulletin 1998/04**

(51) Int Cl.6: **G02B 3/04**, G02B 5/18

(21) Application number: **97202081.2**

(22) Date of filing: **04.07.1997**

(84) Designated Contracting States:
**AT BE CH DE DK ES FI FR GB GR IE IT LI LU MC NL PT SE**

(30) Priority: **18.07.1996 US 684073**

(71) Applicant: **EASTMAN KODAK COMPANY
Rochester, New York 14650 (US)**

(72) Inventor: **Meyers, Mark Marshall,
Eastman Kodak Co.
Rochester, New York 14650-2201 (US)**

(74) Representative: **Wagner, Karl H., Dipl.-Ing.
WAGNER & GEYER
Patentanwälte
Gewürzmühlstrasse 5
80538 München (DE)**

(54) **Lens with diffractive and aspheric surfaces**

(57)     A lens for forming an image on a photosensor incorporating a first convex surface having diffractive elements incorporated thereon. A second surface which is aspheric is formed substantially opposite the first surface as a convex surface. The second surface, is convex near the optical axis and transitions to a concave surface towards the edge of the lens.

FIG.2

EP 0 819 952 A2

**Description**

## FIELD OF THE INVENTION

This invention is related to the field of lenses and particularly to the field of lenses that are used in conjunction with photosensors.

## BACKGROUND OF THE INVENTION

The back focal distance is a function of the shape of the lens and the number of elements in the lens. For the purpose of minimizing the camera thickness and minimizing the cost of the camera it is desirable to minimize the number of elements in the lens. Normally, when correcting for color aberrations it is necessary to have 2 or more elements. The current invention overcomes this limitation.

## SUMMARY OF INVENTION

The present invention is directed to overcoming one or more of the problems set forth above. Briefly summarized, according to one aspect of the present invention, there is provided a lens for forming an image on a photosensor comprising:

a first convex surface having diffractive means incorporated thereon; and
a second surface which is aspheric, substantially opposite said first surface, formed as a convex surface near the optical axis which transitions to a concave surface towards the edge of the lens.

From the aforementioned it can be seen that it is a preferred object of the present invention to provide a lens which achromatizes and provides for correction of aberrations with a single element lens.

It is another object of the present invention to provide a flat image field which is minimized for, distortion, petzval curvature, and astigmatism by utilizing an aspheric surface where the aspheric terms provide an inflection point part way across the aperture.

These and other aspects, objects, features, and advantages of the present invention will be more clearly understood and appreciated from a review of the following detailed description of the preferred embodiments and appended claims, and by reference to the accompanying drawings.

## BRIEF DESCRIPTION OF THE DRAWINGS

Figs. 1A and 1B are front and back perspective views of a lens formed in accord with the teachings of the present invention;

Fig. 2 is a sectioned view taken along the section lines A-A of the lens of Fig 1A;

Figs. 3A and 3B illustrates the on axis tangential and saggital ray aberration curves;

Figs. 4A and 4B illustrates the 0.69 relative field tangential and saggital ray aberration curves; and

Figs. 5A and 5B illustrates the full field tangential and saggital ray aberration curves.

To facilitate an understanding of the invention, identical reference numerals have been used, where possible, to designate identical elements that are common to the figures.

## DETAILED DESCRIPTION OF THE INVENTION

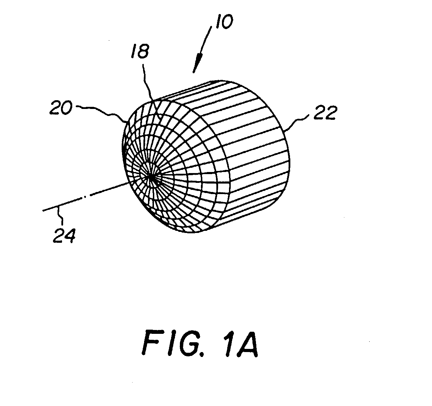

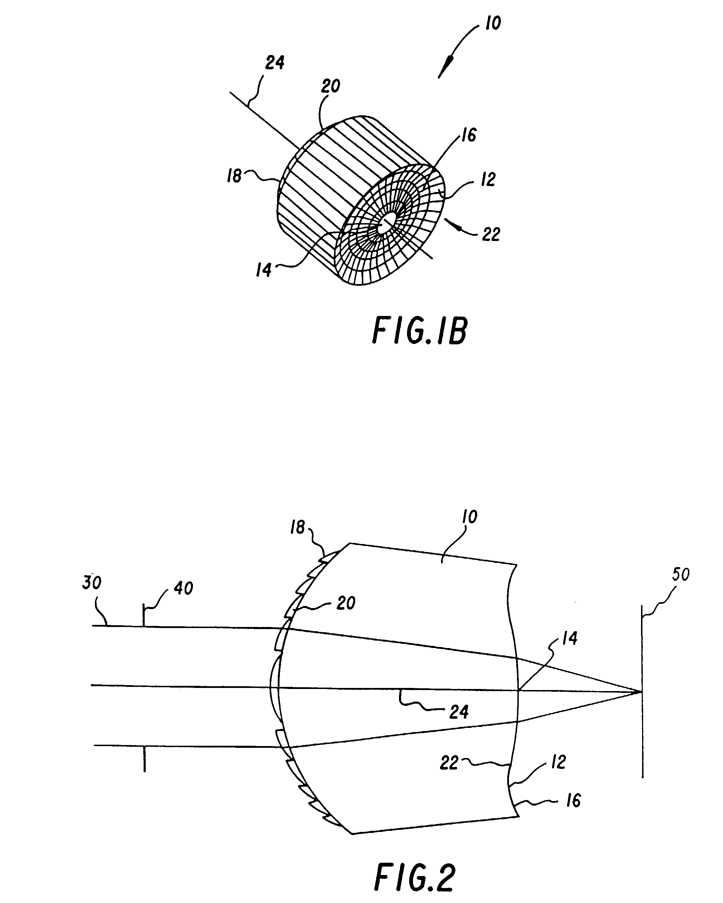

Referring to Figs. 1A and 1B, The lens 10 is formed with a first surface 18 that is a diffractive surface that is formed on a spherical surface 20 and a second surface 22 that is an aspheric surface. At point 14 the second surface is convex and transforms to a concave surface at the radius 12. The second surface 22 defines a polynomial asphere which exhibits an inflection at the radius 16. Both the first and the second surface are substantially perpendicular to the optical axis 24 of the lens. The lens 10 may be formed of optical glass such as, BK7, injection molded plastic, or an epoxy replica.

Referring to Fig. 2, incident light rays 30 pass through an aperture stop 40 and are focused onto a focal plane 50 by the lens 10. The diffractive/refractive surface comprised of the diffractive surface 18 and the spherical surface 20 correct for chromatic aberrations and provides the majority of the focusing power while the aspheric surface 22 provides for correction of field dependent aberrations such as petzval curvature, astigmatism, and coma. The lens shown covers a 20 degree field of view. The lens has an F# of 2.0.

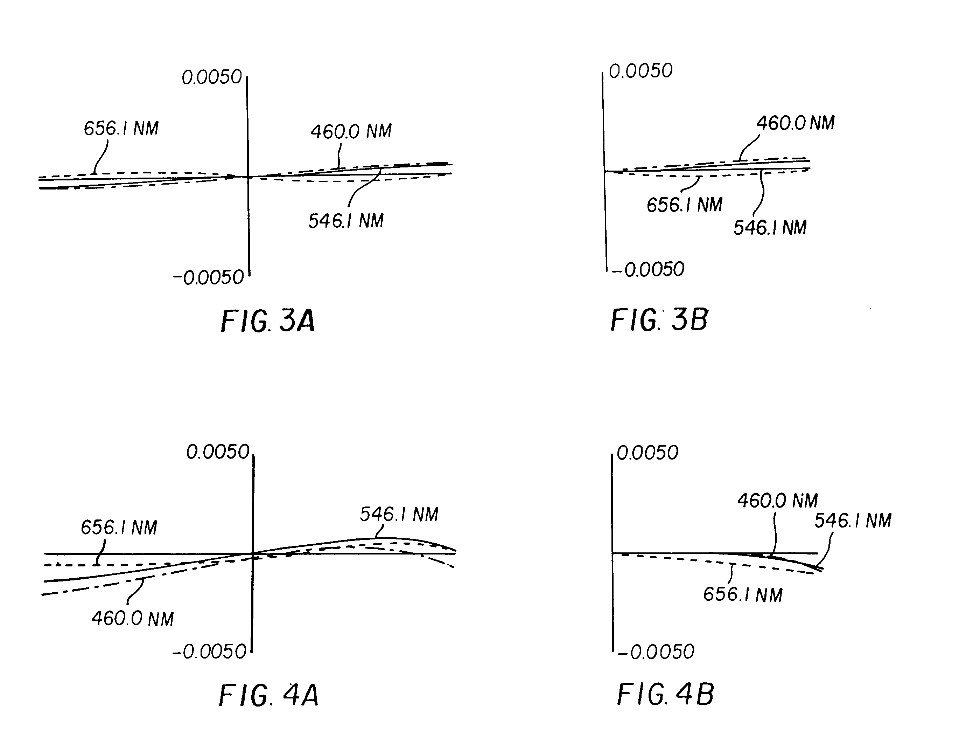

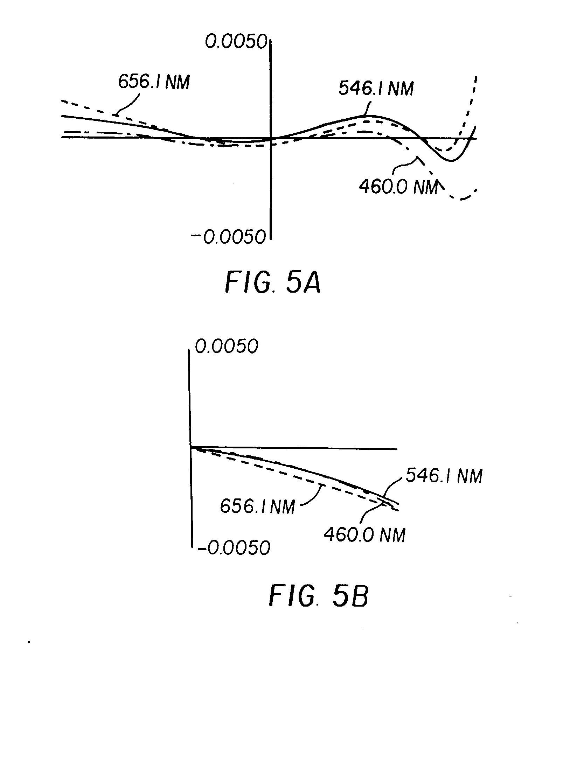

Referring now to Figs 3A through 5B which illustrate the tangential and the saggital curves for a 0 degree, 14 degree and a 20 degree field angle. To be noted is that the spot is less than 10 micron in extent and is comparable to the dimensions of a photosite in a CCD.

The imaging properties of diffractive and holographic optics are strongly wavelength dependent. When modeling a diffractive optic this phenomena can be represented as a direct dependence of equivalent refractive index on wavelength:

$$n\,(\lambda) = [\lambda_c/\lambda](n_c\text{-}1)\text{-}1$$

Diffractive elements impart all of their wavefront bending in an extremely thin layer. This is accounted for in the Sweat model by modeling the diffractive as a very high index material ($n_c = 10,000$) with very low curvatures (weak surfaces) on each surface. The corresponding focal length can then be determined from:

$$f\,(\lambda) = [n(\lambda)\text{-}1]\Delta c$$

so that

$$f(\lambda) = (\lambda_c/\lambda)f_c$$

where $\lambda_c$ = design center wavelength

The resultant dispersion vdiff of the diffractive element is:

$$\nu_{diff} = \frac{n\,(\lambda_c)\text{-}1}{n(\lambda_s)\text{ - }n(\lambda_L)}$$

which reduces to:

$$\nu_{diff} = \frac{\lambda_c}{\lambda_S\text{-}\lambda_L}$$

For designs using:

$$\lambda_c = 587\text{ nm}$$
$$\lambda_s = 486\text{ nm} \qquad V_d = \text{-}3.5$$
$$\lambda_L = 656\text{ nm}$$

For other wavelength bands of interest an appropriate vdiff and element power distribution can be calculated. The direct dependence of the equivalent refractive index on wavelength leads to a small, negative, vdiff and a high level of wavelength dispersion associated with a first order ($m = 1$) diffractive optical element.

Due to the variation of refractive index with wavelength a single element lens has a variation of focal length with wavelength. Two materials with different dispersions can be used to form a doublet lens which has the same focal length at two wavelengths and reduced variation over the whole spectrum. The relative distribution of focal powers required to achieve this is given by

$$\phi_{ref} = \frac{\nu_{ref}{}^*\phi_{total}}{\nu_{ref}\text{ - }\nu_{diff}}$$

$$\phi_{diff} = \frac{\nu_{diff} * \phi_{total}}{\nu_{diff} - \nu_{ref}}$$

The negative vdiff of the diffractive surface allows for achromatization of single element hybrid refractive/diffractive lenses utilizing a positive focal length diffractive and refractive component. It also decreases the focal length and F/# required of the doublet component lenses because a refractive doublet consists of a positive crown (low dispersion) lens with a shorter focal length and smaller F/# than is required for a singlet and a negative flint element which increases the doublet focal length to the correct value and compensates for the dispersion of the positive lens. This effect also decreases the size and weight of the positive element of a hybrid refractive/diffractive element.

For traditional achromatization in the visible regime (d-e-f lines) with PMMA plastic lenses the fraction of power in the refractive and diffractive portions would be

$$\phi_{ref} / \phi_{total} = 94.25\%$$

$$\phi_{diff} / \phi_{total} = 5.75\%$$

It is obvious to a person skilled in the art that one can utilize substrates such a quartz, or optical glasses such as BK7, or utilize epoxy replicas on glass substrates.

The use of diffractive/refractive hybrid achromatization enables the use of diffractive surfaces with longer focal lengths and higher F/#'s. The high F/# makes the diffractive element easier to manufacture due to the large zone spacings. For instance for a lens with a FL = 0.5 mm and a F/# = 2.0 the first order analysis of the refractive and diffractive portions would provide focal lengths and F/#'s of:

$$f_{ref} = 0.531 \text{ mm} \qquad F/\# = 2.12$$

$$f_{diff} = 8.696 \text{ mm} \qquad F/\# = 34.8$$

Assuming the diffractive portion of the lens was used purely for first order chromatic correction.

The following lens specification is an example of a refractive/diffractive lens with a second aspheric surface which can be used for forming images on a digital image sensor. The particular example has a focal length of 0.5 mm and an f/# of 2.0. This lens can be scaled to have a focal length from 0.5 mm to 10 mm:

| Surface No. | Radius | Thickness | Glass |
|---|---|---|---|
| Object | | Infinity | Air |
| 1 Aperture Stop | | 0.282 | Air |
| 2 | 0.38911 | 0.5 | BK7 |
| | | Diffractive Coefficients | DF1 = -6.861 x $10^{-2}$<br>DF2 = 6.568 x $10^{-1}$<br>DF3 = 3.453 x $10^{-3}$<br>DF4 = -1.435 x $10^{2}$<br>DF5 = 1.398 x $10^{3}$ |
| 3 | -0.50499 | 0.25715 | Air |
| Aspheric Coefficients | AD = 0.18542 x $10^{2}$<br>AE = -0.44635 x $10^{3}$<br>AF = 0.10191 x $10^{5}$<br>AG = -0.70929 x $10^{5}$<br>AH = 0.78203 X $10^{5}$ | | |
| Image | | | Air |

The following lens specification is an example of a refractive/diffractive lens having a focal length of 10 mm and an f/# of 2.8.

| Surface No. | Radius | Thickness | Glass |
|---|---|---|---|
| Object | | Infinity | Air |
| 1 Aperture Stop | | 6.3862 | Air |
| 2 | 11.6124 | 4.0 | BK7 |
| | | Diffractive Coefficients | DF1 = -2.335 x 10$^{-3}$<br>DF2 = -7.269 x 10$^{-5}$<br>DF3 = 7.796 x 10$^{-6}$<br>DF4 = -2.308 x 10$^{-7}$ |
| 3 | -8.908 | 8.810 | Air |
| Aspheric Coefficients | AD = 0.301007 x 10$^{-2}$<br>AE = -0.62806 x 10$^{-3}$<br>AF = 0.83486 x 10$^{-4}$<br>AG = -0.59885 x 10$^{-5}$<br>AH = 0.21755 x 10$^{-6}$<br>AI = -0.31171 x 10$^{-8}$ | | |
| Image | | | Air |

In the above tables, the aspheric surface profile is defined by

$$z(r) = \frac{cv\, r^2}{1 + \sqrt{1 - (k+1)cv^2 r^2}} + AD\, r^4 + AE\, r^6 + AF\, r^8 + AG\, r^{10} + AH\, r^{12} + AI\, r^{14}$$

and the diffractive phase profile is defined as

$$\phi(r) = \frac{2\pi}{\lambda_0}(DF_1 r^2 + DF_2 r^4 + DF_3 r^6 + DF_4 r^8 + DF_5 r^{10})$$

where

$$\lambda_0 = 546.1 \text{ nm}$$

The effect of the use of an aspheric surface with an inflection on the rear of the lens is to correct field dependent aberrations such as astigmatism, petzval curvature, distortion, and coma. The transition from a convex surface on axis to a concave surface on the edge of the lens allows for a lengthening of the local effective focal length for rays at the edge of the field of view. Since petzval curvature causes light incident from larger field angles to be focused closer to the rear of the lens the use of a local varying effective focal length can allow the cancellation of this effect by lengthening the focal length at the edge of the field of view.

The invention has been described with reference to preferred embodiments. However, it will be appreciated that variations and modifications can be effected by a person of ordinary skill in the art without departing from the scope of the invention.

**PARTS LIST:**

10   lens
12   radius
14   point
16   radius
18   diffractive surface

20 spherical surface
22 aspheric surface
24 optical axis

30 incident light rays

40 aperture stop

50 focal plane

## Claims

1. A lens for forming an image on a photosensor comprising:

   a first convex surface having diffractive means incorporated thereon; and
   a second surface which is aspheric, substantially opposite said first surface, formed as a convex surface near the optical axis which transitions to a concave surface towards the edge of the lens.

2. A lens arrangement for forming an image on a photosensor comprising:

   an aperture stop; and
   a lens having a first convex, spherical surface with diffractive means incorporated thereon spaced a distance from said aperture stop; said lens having a second surface which is aspheric, formed substantially opposite said first surface, where the aspheric surface deformaton is convex near the center and transitions to concave towards the edge of the lens.

3. A lens for forming an image on a photosensor according to Claim 1 wherein the focal length of the lens is between 0.5 and 10 mm.

4. A lens for forming an image on a photosensor according to Claim 1 wherein the F/# is at least 2.0.

5. A lens according to Claim 1 wherein the diffractive surface is used to correct for chromatic aberration.

FIG. 1A

FIG.IB

FIG.2

0.0050

460.0 NM

656.1 NM

546.1 NM

-0.0050

*FIG. 3B*

0.0050

460.0 NM

546.1 NM

656.1 NM

-0.0050

*FIG. 4B*

0.0050

460.0 NM

546.1 NM

656.1 NM

-0.0050

*FIG. 3A*

0.0050

546.1 NM

656.1 NM

460.0 NM

-0.0050

*FIG. 4A*

FIG. 5A

FIG. 5B